(19) **Europäisches Patentamt / European Patent Office / Office européen des brevets**

(11) **EP 4 675 333 A1**

(12) **EUROPEAN PATENT APPLICATION**
published in accordance with Art. 153(4) EPC

(43) Date of publication:
07.01.2026 Bulletin 2026/02

(51) International Patent Classification (IPC):
G02B 27/01 (2006.01)    G02B 6/34 (2006.01)
G02B 6/124 (2006.01)

(21) Application number: 24917569.6

(22) Date of filing: 11.10.2024

(86) International application number:
PCT/CN2024/124068

(87) International publication number:
WO 2025/232083 (13.11.2025 Gazette 2025/46)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 07.05.2024 CN 202410552766

(71) Applicant: Nanchang Virtual Reality Research
Institute
Co., Ltd.
Nanchang, Jiangxi 330013 (CN)

(72) Inventors:
• YANG, Junxing
Nanchang
Jiangxi 330013 (CN)

• NI, Mingli
Nanchang
Jiangxi 330013 (CN)
• SUN, Qimin
Nanchang
Jiangxi 330013 (CN)
• PENG, Haiyan
Nanchang
Jiangxi 330013 (CN)
• JIE, Xiaolin
Nanchang
Jiangxi 330013 (CN)

(74) Representative: Metida
Gyneju str. 16
01109 Vilnius (LT)

(54) **DISPLAY DEVICE COMPRISING SINGLE-LAYER COLOR HOLOGRAPHIC OPTICAL WAVEGUIDE**

(57) This application provides a single-layer color holographic optical waveguide display apparatus. This application employs a coupling-in grating and a coupling-out grating capable of responding to image light of different fields of view, with the grating periods of the coupling-in grating and the coupling-out grating being identical, so that fields of view corresponding to image light of different fields of view are interconnected, thereby achieving single-layer waveguide color display. Compared to other optical waveguide color solutions, this application has the advantages of light weight, simple process, low cost, and contribution to large-scale production.

FIG. 1

EP 4 675 333 A1

## Description

## TECHNICAL FIELD

Embodiments of this application pertain to the field of AR display technology, and particularly relates to a single-layer color holographic optical waveguide display apparatus.

## BACKGROUND

Diffractive optical waveguide display technology is a significant development direction in the field of augmented reality (AR). Diffractive optical waveguide displays mainly include two types: surface relief gratings and holographic volume gratings. Due to the chromatic dispersion effect of diffraction gratings, incident light of different wavelengths corresponds to different diffraction angles at a same diffraction order, meaning that image light of different colors propagates at different angles in a total internal reflection manner within the waveguide. This results in a smaller achievable field of view for single-layer waveguide full-color display. Additionally, under the action of a same diffraction grating, the diffraction efficiency corresponding to different wavelengths varies significantly, leading to poor color uniformity in an image.

To mitigate or address the aforementioned technical issues and achieve full-color optical waveguide display, one existing approach in the prior art is to use multiple stacked optical waveguide layers to address the aforementioned technical issues. In this approach, the optical waveguide layers correspond to different color channels for diffraction grating design. However, this approach has the problems of complex manufacturing processes, high costs, low diffraction efficiency, and large size of multiple optical waveguide layers. Another approach involves use of a single optical waveguide multiplexed with a grating or a combination of multiple gratings, but this solution is complex in design, has low diffraction efficiency, and suffers from ghost image effects due to chromatic dispersion.

## SUMMARY

To address or mitigate the issues in the prior art, embodiments of this application provide a single-layer color holographic optical waveguide display apparatus, including an image output apparatus, a coupling-in grating, a coupling-out grating, and an optical waveguide.

The image output apparatus includes a microdisplay and a collimating lens assembly, where the microdisplay outputs image light of red, green, and blue wavelengths, the image light is emitted into the optical waveguide through the collimating lens assembly, and the image light of red, green, and blue wavelengths corresponds to different fields of view, respectively;

the coupling-in grating and the coupling-out grating are both slanted holographic volume gratings;

the coupling-in grating and the coupling-out grating have identical grating periods; and

the coupling-in grating responds to the image light of red, green, and blue wavelengths, the image light then propagates to the coupling-out grating through the optical waveguide in a total internal reflection manner, and is ultimately emitted through the coupling-out grating to form a single-layer color display image with Bragg angles corresponding to the red, green, and blue wavelengths sequentially arranged and interconnected.

In an example of this application, the coupling-in grating and the coupling-out grating each include a polymer matrix and liquid crystal; the polymer matrix has a refractive index of 1.45 to 1.65; and the coupling-in grating and the coupling-out grating have a thickness of 2 $\mu$m to 10 $\mu$m.

In an example of this application, the apparatus further includes a turning grating.

The turning grating is disposed in the optical waveguide, a grating period of the turning grating is less than the grating periods of the coupling-in grating and the coupling-out grating, and optical vectors of the coupling-in grating, the coupling-out grating, and the turning grating form a closed triangle.

In an example of this application, the slanted holographic volume gratings are both transmission gratings and/or reflection volume gratings.

In an example of this application, the transmission gratings have a slant angle of 45° to 71.5°, and the reflection gratings have a slant angle of 18.5° to 45°.

In an example of this application, the grating periods of the coupling-in grating and the coupling-out grating range from 175 nm to 10 $\mu$m.

In an example of this application, refractive indexes of the coupling-in grating and the coupling-out grating range from 0.01 to 0.1.

In an example of this application, the optical waveguide has a thickness of 1 mm to 2.5 mm and a refractive index of 1.5 to 2.0.

Compared to the prior art, the embodiments of this application provide a single-layer color holographic optical waveguide display apparatus. This application employs a coupling-in grating and a coupling-out grating capable of responding to image light of different fields of view, with the grating periods of the coupling-in grating and the coupling-out grating being identical, so that fields of view corresponding to image light of different fields of view are interconnected, thereby achieving single-layer waveguide color display. Compared to other optical waveguide color solutions, this application has the advantages of light weight, simple process, low cost, and contribution to large-scale production.

## BRIEF DESCRIPTION OF DRAWINGS

The drawings described herein are provided to further understand this application and form a part of this application. The schematic embodiments and descriptions thereof are used to explain this application and do not constitute any improper limitation on this application. Some specific embodiments of this application will be described in detail below with reference to the drawings in an exemplary but non-limiting manner. Identical reference numerals in the drawings denote identical or similar components or parts, and those skilled in the art should understand that these drawings are not necessarily drawn to scale. In the drawings:

FIG. 1 is a schematic structural diagram of a single-layer color holographic optical waveguide display apparatus according to an embodiment of this application;

FIG. 2 is a schematic structural diagram of another single-layer color holographic optical waveguide display apparatus according to an embodiment of this application;

FIG. 3 is a schematic diagram of distribution of different fields of view of a microdisplay according to an embodiment of this application;

FIG. 4 is a schematic structural diagram of a single-layer color holographic optical waveguide display apparatus according to an embodiment of this application;

FIG. 5 is a schematic diagram of display content of an image source according to an embodiment of this application; and

FIG. 6 is an example (a) and a comparative example (b) of Bragg diffraction distribution corresponding to different wavelengths for a transmission volume grating according to an embodiment of this application.

## DESCRIPTION OF EMBODIMENTS

To enable those skilled in the art to better understand the solutions of this application, the technical solutions in the embodiments of this application will be clearly and completely described below in conjunction with the drawings in the embodiments of this application. It is apparent that the described embodiments are merely some embodiments rather than all embodiments of this application. Based on the embodiments of this application, all other embodiments obtained by those of ordinary skill in the art without creative efforts shall fall within the protection scope of this application.

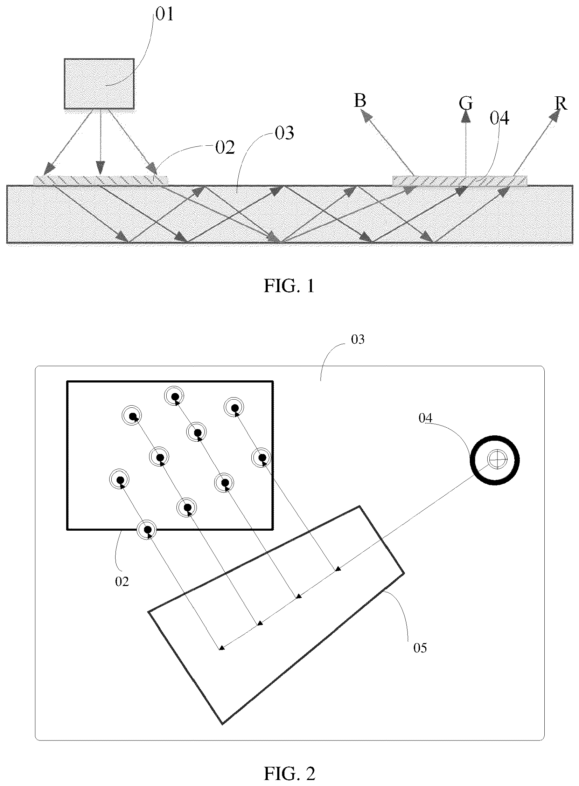

As shown in FIG. 1, an embodiment of this application provides a single-layer color holographic optical waveguide display apparatus, including: an image output apparatus 01, a coupling-in grating 02, a coupling-out grating 04, and an optical waveguide 03.

Image light of different fields of view is outputted through the image output apparatus 01, the image light of different fields of view is diffracted by the coupling-in grating 02, sequentially enters the optical waveguide 03, propagates to the coupling-out grating 04 in a total internal reflection manner, is diffracted again by the coupling-out grating 04, exits the optical waveguide 03, and is then imaged in human eyes for display.

In this embodiment of this application, the coupling-in grating 02 couples the image light outputted by the image output apparatus 01 into the optical waveguide 03, and propagates in the optical waveguide 03 in a total internal reflection manner. When the image light propagates to the exit end of the optical waveguide 03, the image light is diffracted again by the coupling-out grating 04 so that the image light is coupled out of the optical waveguide 03. Through the design and manufacturing process of holographic volume gratings, the Bragg angles corresponding to different wavelengths are sequentially separated under the diffraction effect of the coupling-in grating 02 and the coupling-out grating 04, thereby achieving the display of images corresponding to respective colors in different fields of view, that is, enabling color display with a single optical waveguide 03 through the coupling-in grating and the coupling-out grating.

The coupling-in grating 02 and the coupling-out grating 04 are both holographic volume gratings formed through holographic exposure of polymer-dispersed liquid crystal, and the coupling-in grating 02 and the coupling-out grating 04 have identical grating periods. This embodiment can achieve one-dimensional pupil expansion.

As shown in FIG. 2, the apparatus further includes a turning grating 05; the turning grating 05 is disposed in the optical waveguide 03, a grating period of the turning grating 05 is less than the grating periods of the coupling-in grating 02 and the coupling-out grating 04, and optical vectors of the coupling-in grating 02, the coupling-out grating 04, and the turning grating 05 form a closed triangle.

In this embodiment of this application, the coupling-in grating 02 and the coupling-out grating 04 are both slanted volume gratings. The coupling-in grating 02 is configured to couple image light of different fields of view into the optical waveguide 03, the turning grating 05 is configured to expand and transmit the light within the optical waveguide 03 along a grating direction, and the coupling-out grating 04 is configured to expand the light in another direction as well as to couple the light out of the optical waveguide 03 so that the light enters human eyes for imaging. This embodiment of this application can achieve two-dimensional pupil expansion.

Similarly, image light of different fields of view passes through specific gratings (with optimized grating period, slant angle, and material refractive index modulation), so that the image light of different fields of view representing three colors can be well interconnected into a complete image, with higher diffraction efficiency compared to surface relief gratings.

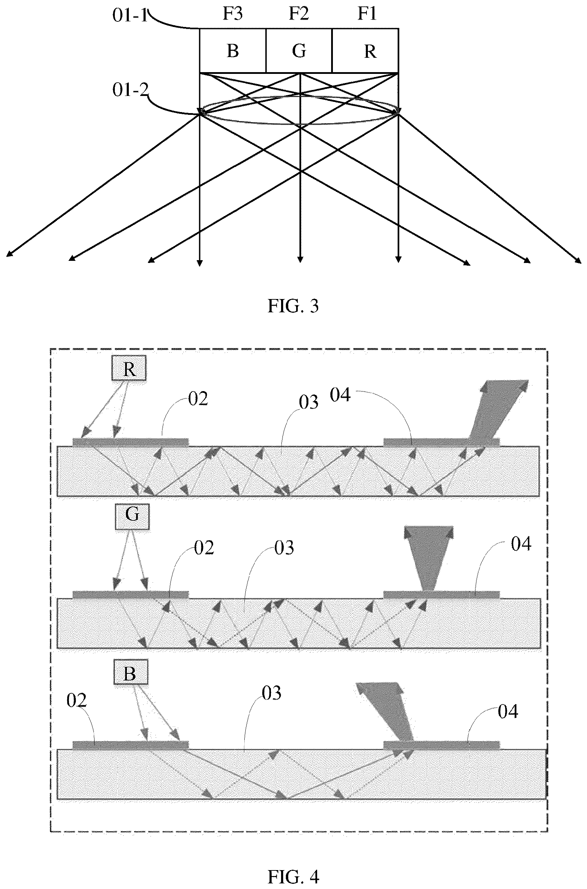

Specifically, as shown in FIG. 3 and FIG. 4, in this embodiment of this application, the image output apparatus 01 is a projection system, the projection system includes a microdisplay 01-1 and a collimating lens assembly 01-2, where image light outputted by the microdisplay 01-1 includes a red (R) part, a green (G) part, and a blue (B) part, which respectively correspond to different fields of view and are denoted as view F1, view F2, and view F3, respectively. The optical waveguide 03 serves as a light propagation carrier, with an input region and an output region on its surface, where the input region corresponds to the coupling-in grating 02, and the output region corresponds to the coupling-out grating 04. When incident light of different fields of view passes through the coupling-in grating 02, the light sequentially enters the optical waveguide 03 under the diffraction effect of the coupling-in grating 02, propagates to the coupling-out grating 04 in a total internal reflection manner, is diffracted again to exit the optical waveguide 03, and then enters human eyes for imaging.

Due to the unique Bragg diffraction characteristics of holographic volume gratings, Bragg diffraction is selective not only to direction but also to wavelength. Crystal lattice diffraction can be classified based on types of lattices and the monochromaticity of light sources. Lattice-based classification includes Bragg diffraction of single crystals and Bragg diffraction of polycrystals. The energy of Bragg diffraction is primarily concentrated in low diffraction orders (for example, a 0th order, a +1st order, or -1st order), resulting in higher diffraction efficiency, and offering a technical advantage of high-brightness display compared to an optical waveguide 03 with a surface relief grating. Additionally, holographic volume gratings respond to different Bragg angles for recurrent incident light of different wavelengths.

$$P = \frac{\lambda_r}{2n \sin \theta_r} = \frac{\lambda_g}{2n \sin \theta_g} = \frac{\lambda_b}{2n \sin \theta_b}$$

In the above formula, P represents a period of the volume grating; n represents a refractive index of a medium surrounding the volume grating; $\lambda r$, $\lambda g$, and $\lambda b$ correspond to wavelengths of red (R), green (G), and blue (B) incident light, respectively; and $\theta_r$, $\theta_g$, and $\theta_b$ correspond to Bragg angles of different incident lights, respectively. Thus, incident light of different wavelengths propagates in different fields of view without interference, meaning there is nearly no chromatic dispersion effect.

In this embodiment of this application, an image source of the microdisplay may be: a microdisplay projector such as a micro light-emitting diode (Micro-LED), a micro organic light-emitting diode (Micro-OLED), or an off-axis optical projection system (LCOS); where image content displayed by the image source includes a red (R) part, a green (G) part, and a blue (B) part, which correspond to different fields of view, respectively.

The holographic volume grating includes a polymer matrix and liquid crystal and is prepared through holographic exposure, where a coupling-in volume grating and a coupling-out volume grating have identical periods and can be both transmission volume gratings or reflection volume gratings, or a combination of a transmission type and a reflection type.

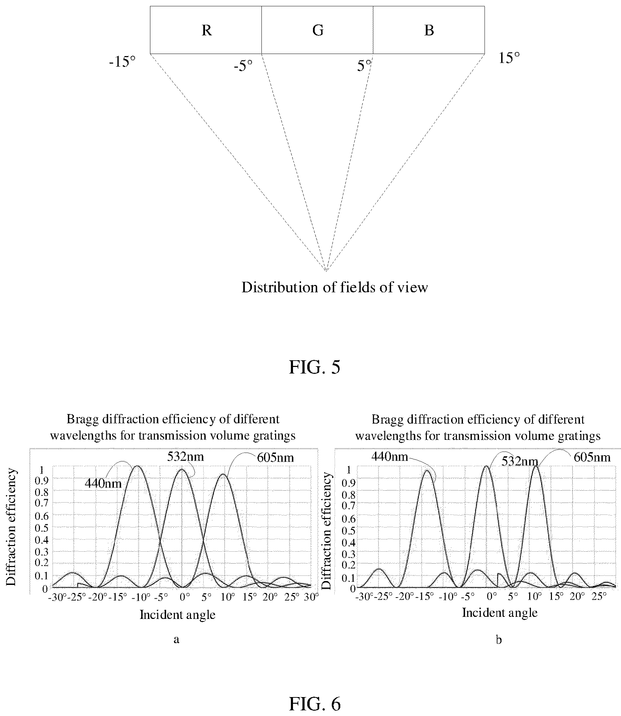

As shown in FIG. 5 and FIG. 6, the holographic volume gratings can respond to wavelengths of red (R), green (G), and blue (B) colors in their respective fields of view, ensuring that Bragg angles corresponding to the wavelengths are sequentially arranged and interconnected without overlap of the fields of view (for example, for a 30° horizontal field of view, $\theta_r$, $\theta_g$, and $\theta_b$ are located in a field of view interval of (-15°, -5°), a field of view interval of (-5°, 5°), and a field of view interval of (5°, 15°), respectively).

In an embodiment of this application, the holographic volume gratings are slanted volume gratings, where the reflection grating has a slant angle of 18.5° to 45°, and the transmission grating has a slant angle of 45° to 71.5°.

In an embodiment of this application, the grating periods of the holographic volume gratings range from 175 nm to 10 μm.

In an embodiment of this application, the holographic volume gratings have a thickness ranging from 2 μm to 10 μm.

In an embodiment of this application, an average refractive index of the polymer material ranges from 1.45 to 1.65.

In an embodiment of this application, refractive indexes of the holographic volume gratings range from 0.01 to 0.1.

The optical waveguide 03 has a thickness of 1 mm to 2.5 mm and a refractive index of 1.5 to 2.0, which is preferably ordinary glass with a refractive index of 1.52, with a relatively low manufacturing cost compared to high-refractive-index glass as well as a glass transmittance greater than 92% and a haze less than 5%.

In this embodiment of this application, slanted volume gratings responding to different wavelengths of red (R), green (G), and blue (B) in different fields of view are formed on specific polymer materials through holographic exposure, with the fields of view corresponding to the red (R), green (G), and blue (B) image light being interconnected, thereby achieving single-layer waveguide color display. Compared to other optical waveguide color solutions, this application has the advantages of light weight, simple process, low cost, high brightness, nearly no chromatic dispersion, and contribution to large-scale production.

This embodiment of this application provides a single-layer color optical waveguide display apparatus. First, unlike other optical waveguide color solutions (where current color optical waveguide display is typically realized by use of multiple stacked optical waveguide layers or multiple stacked gratings, both of which bring volume or cost issues; or another solution involving multi-wavelength multiplexing imposes higher requirements on manufacturing processes, and leads to problems such as lower diffraction efficiency caused by multiplexing, and generation of stray light). This application achieves color display using a single waveguide layer provided with a single grating layer thereon. This is primarily achieved by adjusting grating layout and structural parameters of the grating, in combination with proprietary polymer materials; then through software simulation, under different wavelengths, field-of-view angles are interconnected under the diffraction effect of same grating, without reducing the diffraction efficiency; and ultimately single-layer color optical waveguide display is achieved.

In conclusion, it should be noted that the above embodiments are only used to illustrate the technical solutions of this application and are not intended to limit them. Although this application has been described in detail with reference to the foregoing embodiments, those of ordinary skill in the art should understand that modifications can be made to the technical solutions described in the foregoing embodiments, or equivalent replacements can be made to some or all of the technical features; and these modifications or replacements do not cause the essence of the corresponding technical solutions to depart from the scope of the technical solutions of the embodiments of this application.

## Claims

1. A single-layer color holographic optical waveguide display apparatus, comprising an image output apparatus, a coupling-in grating, a coupling-out grating, and an optical waveguide; wherein

   the image output apparatus comprises a microdisplay and a collimating lens assembly, wherein the microdisplay outputs image light of red, green, and blue wavelengths, the image light is emitted into the optical waveguide through the collimating lens assembly, and the image light of red, green, and blue wavelengths corresponds to different fields of view, respectively;
   the coupling-in grating and the coupling-out grating are both slanted holographic volume gratings;
   the coupling-in grating and the coupling-out grating have identical grating periods; and
   the coupling-in grating responds to the image light of red, green, and blue wavelengths, the image light then propagates to the coupling-out grating through the optical waveguide in a total internal reflection manner, and is ultimately emitted through the coupling-out grating to form a single-layer color display image with Bragg angles corresponding to the red, green, and blue wavelengths sequentially arranged and interconnected.

2. The single-layer color holographic optical waveguide display apparatus according to claim 1, wherein the coupling-in grating and the coupling-out grating each comprise a polymer matrix and liquid crystal; the polymer matrix has a refractive index of 1.45 to 1.65; and the coupling-in grating and the coupling-out grating have a thickness of 2 $\mu$m to 10 $\mu$m.

3. The single-layer color holographic optical waveguide display apparatus according to claim 1, further comprising a turning grating; wherein
   the turning grating is disposed in the optical waveguide, a grating period of the turning grating is less than the grating periods of the coupling-in grating and the coupling-out grating, and optical vectors of the coupling-in grating, the coupling-out grating, and the turning grating form a closed triangle.

4. The single-layer color holographic optical waveguide display apparatus according to claim 2, wherein the slanted holographic volume gratings are both transmission gratings and/or reflection volume gratings.

5. The single-layer color holographic optical waveguide display apparatus according to claim 4, wherein the transmission gratings have a slant angle of 45° to 71.5°, and the reflection gratings have a slant angle of 18.5° to 45°.

6. The single-layer color holographic optical waveguide display apparatus according to claim 1, wherein the grating periods of the coupling-in grating and the coupling-out grating range from 175 nm to 10 $\mu$m.

7. The single-layer color holographic optical waveguide display apparatus according to claim 1, wherein refractive indexes of the coupling-in grating and the coupling-out grating range from 0.01 to 0.1.

8. The single-layer color holographic optical waveguide display apparatus according to claim 1, wherein the optical waveguide has a thickness of 1 mm to 2.5 mm and a refractive index of 1.5 to 2.0.

FIG. 1

FIG. 2

FIG. 3

FIG. 4

Distribution of fields of view

FIG. 5

a

b

FIG. 6

## INTERNATIONAL SEARCH REPORT

| International application No. |
|---|
| **PCT/CN2024/124068** |

| A. | CLASSIFICATION OF SUBJECT MATTER |
|---|---|

G02B27/01(2006.01)i; G02B6/34(2006.01)i; G02B6/124(2006.01)i

According to International Patent Classification (IPC) or to both national classification and IPC

| B. | FIELDS SEARCHED |
|---|---|

Minimum documentation searched (classification system followed by classification symbols)

IPC: G02B

Documentation searched other than minimum documentation to the extent that such documents are included in the fields searched

Electronic data base consulted during the international search (name of data base and, where practicable, search terms used)

CNTXT: WPABSC; ENTXTC; CNKI; VEN; WPABS; ENTXT: 全息, 体光栅, 倾斜, 周期, 准直, 布拉格, hologra+, volume grating, slant+, period, collimat+, bragg

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 118244495 A (NANCHANG VIRTUAL REALITY INSTITUTE CO., LTD.) 25 June 2024 (2024-06-25) description, paragraphs [0004]-[0027], and figures 1-6 | 1-8 |
| X | US 2010046070 A1 (SONY CORP.) 25 February 2010 (2010-02-25) description, paragraphs [0031]-[0165], and figures 1A-14B | 1, 6, 7 |
| Y | US 2010046070 A1 (SONY CORP.) 25 February 2010 (2010-02-25) description, paragraphs [0031]-[0165], and figures 1A-14B | 2-5, 8 |
| Y | CN 107167920 A (SOUTHEAST UNIVERSITY) 15 September 2017 (2017-09-15) description, paragraphs [0005]-[0040], and figures 1-5 | 2, 4, 5, 8 |
| Y | CN 218788115 U (SHANGHAI KUNYOU TECHNOLOGY CO., LTD.) 04 April 2023 (2023-04-04) description, paragraphs [0005]-[0066], and figures 1 and 5 | 3 |
| A | CN 106338832 A (SVG OPTRONICS CO., LTD. et al.) 18 January 2017 (2017-01-18) entire document | 1-8 |

☑ Further documents are listed in the continuation of Box C.        ☑ See patent family annex.

| * | Special categories of cited documents: | | "T" | later document published after the international filing date or priority date and not in conflict with the application but cited to understand the principle or theory underlying the invention |
|---|---|---|---|---|
| "A" | document defining the general state of the art which is not considered to be of particular relevance | | | |
| "D" | document cited by the applicant in the international application | | "X" | document of particular relevance; the claimed invention cannot be considered novel or cannot be considered to involve an inventive step when the document is taken alone |
| "E" | earlier application or patent but published on or after the international filing date | | | |
| "L" | document which may throw doubts on priority claim(s) or which is cited to establish the publication date of another citation or other special reason (as specified) | | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | "&" | document member of the same patent family |
| "P" | document published prior to the international filing date but later than the priority date claimed | | | |

| Date of the actual completion of the international search | Date of mailing of the international search report |
|---|---|
| **10 November 2024** | **19 November 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**EP 4 675 333 A1**

**INTERNATIONAL SEARCH REPORT**

International application No.

**PCT/CN2024/124068**

### C. DOCUMENTS CONSIDERED TO BE RELEVANT

| Category* | Citation of document, with indication, where appropriate, of the relevant passages | Relevant to claim No. |
|---|---|---|
| A | CN 113219671 A (SHENZHEN GUANGZHOU SEMICONDUCTOR TECHNOLOGY CO., LTD.) 06 August 2021 (2021-08-06) entire document | 1-8 |
| A | CN 110471185 A (AAC COMMUNICATION TECHNOLOGIES (CHANGZHOU) CO., LTD.) 19 November 2019 (2019-11-19) entire document | 1-8 |

Form PCT/ISA/210 (second sheet) (July 2022)

10

**INTERNATIONAL SEARCH REPORT**
Information on patent family members

International application No.

**PCT/CN2024/124068**

| Patent document cited in search report | | | Publication date (day/month/year) | Patent family member(s) | | | Publication date (day/month/year) |
|---|---|---|---|---|---|---|---|
| CN | 118244495 | A | 25 June 2024 | None | | | |
| US | 2010046070 | A1 | 25 February 2010 | US | 7944616 | B2 | 17 May 2011 |
| CN | 107167920 | A | 15 September 2017 | None | | | |
| CN | 218788115 | U | 04 April 2023 | None | | | |
| CN | 106338832 | A | 18 January 2017 | None | | | |
| CN | 113219671 | A | 06 August 2021 | None | | | |
| CN | 110471185 | A | 19 November 2019 | None | | | |

Form PCT/ISA/210 (patent family annex) (July 2022)